# EUROPEAN PATENT APPLICATION

(11) **EP 1 677 212 A1**
(43) Date of publication of application: **05.07.2006**
(21) Application number: 05027363.0
(22) Date of filing: 14.12.2005
(51) Int. Cl.: G06F 17/30

(54) **System and method for enterprise data objects**

(30) Priority: 29.12.2004 US 27810
(71) Applicant: SAP AG, 69190 Walldorf (DE)
(72) Inventor: Brendle, Rainer, 69151 Neckargemünd (DE); Brunswig, Frank, 69118 Heidelberg (DE); Gauweiler, Thomas, 67346 Speyer (DE); Viegener, Johannes, 67149 Karslruhe (DE); Pavithran, Dinu, 560017 Bangalore (IN)
(74) Representative: Müller-Boré & Partner Patentanwälte

(57) **Abstract**

Embodiments of the invention are generally directed to a system and method for enterprise data objects. An enterprise data object is a container of data that can be used in a wide range of technical and semantic layers within a business system. In particular, enterprise data objects provide high-level interfaces that can be used to access and manipulate complex and structured data.

## Description

### TECHNICAL FIELD

Embodiments of the invention generally relate to the field of data processing and, more particularly, to a system and method for enterprise data objects.

### BACKGROUND

The complexity of information technology (IT) continues to increase over time. For example, enterprise applications are evolving and data sources are becoming more diverse. In addition, IT infrastructures increasingly include a heterogeneous combination of packaged enterprise software suites, applications, and legacy systems. In large companies, this heterogeneity is often further complicated by multiple acquisitions and divestitures which create IT infrastructures having disparate, stand-alone systems carried over from these business changes.

The demands that businesses place on IT infrastructures are also increasing over time. For example, many businesses provide access to their products and services through applications that are delivered over computer networks such as the Internet. Each business transaction, however, typically involves accessing a number of different services that are provided by different systems. Consider, for example, the process of canceling an order. From a business perspective, the process of canceling an order includes several cross-functional and cross-application activities such as sending a confirmation to the customer, removing the order from the production plan, releasing materials allocated to the order, and notifying the invoicing department. Each of these activities typically includes accessing a service provided by a different system.

This combination of a growing demand for services with an increase in the complexity of the IT infrastructure providing the services suggests that enterprise data is being used more frequently by increasingly complex systems. The process of canceling an order, for example, may involve multiple systems processing, to one degree or another, substantially the same enterprise data. These systems may use a variety of applications each potentially having a different data source to process the enterprise data.

### SUMMARY OF THE INVENTION

Embodiments of the invention are generally directed to a system and method for enterprise data objects. An enterprise data object is a container of data that can be used in a wide range of technical and semantic layers within a business system. In particular, enterprise data objects provide high-level interfaces that can be used to access and manipulate complex and structured data. In an embodiment, enterprise data objects also include high-level interfaces to access and manipulate metadata such as type descriptions, patterns, value sets, language dependent labels, and the like.

### BRIEF DESCRIPTION OF THE DRAWINGS

Embodiments of the invention are illustrated by way of example, and not by way of limitation, in the figures of the accompanying drawings in which like reference numerals refer to similar elements.
**Figure 1** is a block diagram of selected elements of a service-oriented architecture.
**Figure 2** is a block diagram illustrating selected aspects of an enterprise data object framework according to an embodiment of the invention.
**Figure 3** is a block diagram illustrating selected aspects of a Descriptor interface.
**Figure 4** is a block diagram illustrating selected aspects of an IEdoElement interface.
**Figure 5** is a block diagram illustrating selected aspects of an IEdoAtomicElement interface.
**Figure 6** is a block diagram illustrating selected aspects of an IEdoVariant interface.
**Figure 7** is a block diagram illustrating selected aspects of an IEdoStructure interface.
**Figure 8** is a block diagram illustrating selected aspects of an IEdoTable interface.
**Figure 9** is a flow diagram illustrating certain aspects of a method for accessing and manipulating an enterprise data object, according to an embodiment of the invention.

### DETAILED DESCRIPTION

Embodiments of the invention are generally directed to a system and method for enterprise data objects. An enterprise data object is a container of data that can be used in a wide range of technical and semantic layers within a business system. In particular, enterprise data objects provide high-level interfaces that can be used to access and manipulate complex and structured data. As is further described below, enterprise data objects may also include high-level interfaces to access and manipulate metadata such as type descriptions, patterns, value sets, language dependent labels, and the like. In one embodiment, the metadata can be dynamically created and modified at runtime. Dynamically creating and modifying metadata may include, for example, creating and/or modifying metadata for entire data types and/or for particular instances of data types.

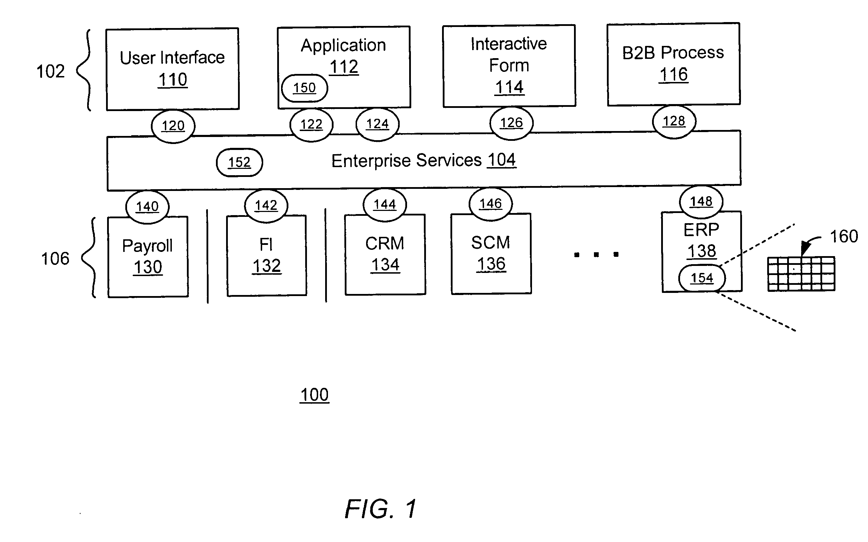

FIG. 1 is a block diagram of selected elements of a service-oriented architecture 100. The term "service-oriented architecture" refers to an architecture in which services (or other functionality) are defined using a description language. These services may have interfaces that can be invoked to perform business processes. The interfaces may be platform-independent and designed to use standardized communication protocols.

The illustrated embodiment of service-oriented architecture 100 includes service consumers 102, enterprise services 104, and enterprise systems 106. Service consumers 102 are interfaces, applications, processes, and the like that invoke the business services provided by service-oriented architecture 100. Examples of a service consumer include user interface 110, application 112, interactive form 114, and business to business process 116.

Enterprise services 104 are an abstraction of the functionality provided by enterprise systems 106. That is, they aggregate the granular services provided by enterprise systems 106 into business-level enterprise services to provide the building blocks for automating enterprise-scale business scenarios. Service consumers 102 invoke interfaces 120-128 to access enterprise services 104. In an embodiment, enterprise services 104 are based, at least in part, on the NetWeaver™ platform provided by SAP AG.

Enterprise systems 106 provide the enterprise applications for service-oriented architecture 100. Examples of enterprise systems 106 include payroll 130, financials 132, customer relations management 134, supply chain management 136, and enterprise resource planning 138. In an embodiment, these enterprise systems are accessed by invoking interfaces 140-148.

Service-oriented architecture 100 includes enterprise data objects 150-154. Enterprise data objects 150-154 are containers of data that can be transported across systems (e.g., between service consumers 102 and enterprise systems 106, and/or between the applications within enterprise systems 106, etc.). In an embodiment, enterprise data objects 150-154 flow across the layers of service-oriented architecture 100 without being copied.

Enterprise data objects 150-154 are containers of data that are designed to be used in a wide range of technical and semantic layers of a business system. In particular, enterprise data objects 150-154 provide high-level interfaces that business application developers can use to access and manipulate data. As is further described below, the enterprise data object interfaces describe a variety of data types including atomics, structures, and tables. In an embodiment, the descriptors of these data types can be created and enhanced dynamically at runtime. In one embodiment, the fields of the structures can be accessed via field name, index, and/or iterator. Similarly, the records of a table can be accessed via key fields, indices, and/or interators.

In an embodiment, enterprise data objects include an internal data structure (e.g., internal data structure 160). The internal data structure provides a mechanism for transporting data between systems. In one embodiment, the size of the internal data structure is dynamically determined by a program at runtime (of course, the size may be restricted by the memory capacity of a system or other factors). The internal data structure may have a defined data type. In an embodiment the data type may be either a simple data type or a compound data type. A simple data type refers to a data type that describes a single value and does not contain an additional structure. Table 1 provides a list of simple data types supported by enterprise data objects in an embodiment of the invention. In an alternative embodiment, enterprise data objects may support more simple data types, fewer simple data types, and/or different simple data types.

**TABLE 1**

| **Name** | **Description** | **Java Interface** |
|---|---|---|
| Integer | arbitrary precision integer | java.lang.Integer, int |
| Double | 64 bit IEEE floating point number | java.lang.Double, double |
| String | an immutable array of Unicode characters | java.lang.String |
| Boolean | bi-state : true or false | java.lang.Boolean, boolean |
| Decimal | A possibly very large array of bytes, manipulated as a stream of bytes. | java.math.BigDecimal |
| Binary | A possibly very large array of bytes, manipulated as a stream of bytes. | |
| Time | only time, no date or time zone | java.sq1.Time |
| Date | only date, no time or time zone | java.sq1.Date |
| TimeStamp | both date and time, not time zone | java.sql.TimeStamp |

A compound data type refers to a data type that is based on other types of data. Table 2 provides a list of compound data types supported by enterprise data objects in an embodiment of the invention. In an alternative embodiment, enterprise data objects may support more compound data types, fewer compound data types, and/or different compound data types.

**TABLE 2**

| **Name** | **Description** | **Java Interface** |
|---|---|---|
| Structure | An ordered set of values; the type definition provides a mapping from names to ordinals. The type defines the names, the type of the values and the ordinal of the value. | IEdoStructure |
| Table | An ordered set of structure values; The type is defined in terms of the contained structure type. | IEdoTable |
| Variant | It can represent one of the many structures is declared to represent. | IEdoVariant |

In an embodiment, service-oriented architecture 100 may be part of a multi-tiered network. The multi-tiered network may be implemented using a variety of different application technologies at each of the layers of the multi-tier architecture, including those based on the Java 2 Enterprise Edition™ ("J2EE") platform, the Microsoft .NET platform, the Websphere platform developed by IBM Corporation, and/or the Advanced Business Application Programming ("ABAP") platform developed by SAP AG. In addition, embodiments of the invention are not limited to service-oriented architecture 100. In alternative embodiments, enterprise data objects may be used in a wide range of client-server and peer-to-peer architectures.

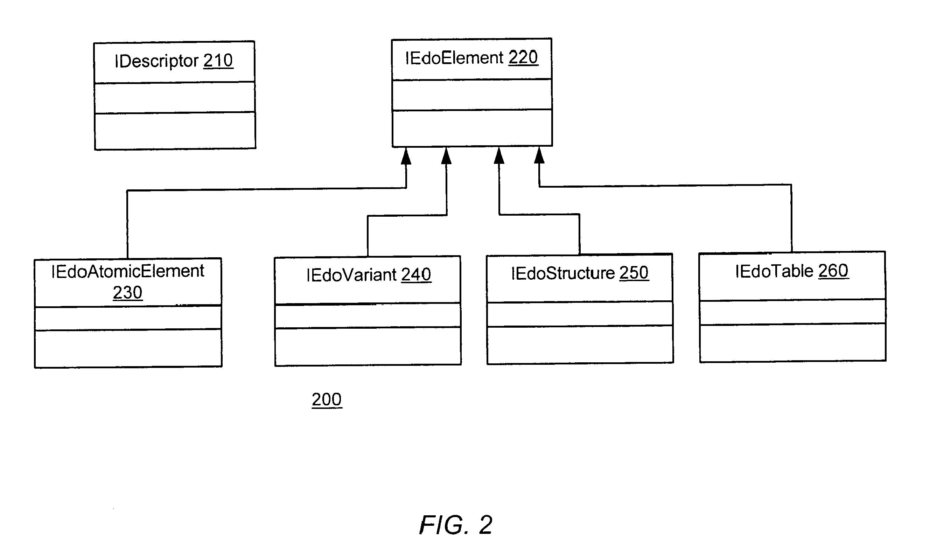

FIG. 2 is a block diagram illustrating selected aspects of enterprise data object framework 200 according to an embodiment of the invention. In the illustrated embodiment, enterprise data object framework 200 includes Descriptor interface 210, EdoElement interface 220, EdoAtomicElement interface 230, EdoVariant interface 240, EdoStructure interface 250, and EdoTable interface 260. As is further described below, interfaces 210-260 enable the creation and modification of enterprise data objects. In addition, interfaces 210-260 enable the creation and modification of the data contained by the enterprise data objects. In an alternative embodiment, enterprise data object framework 200 may include more interfaces, fewer interfaces, and/or different interfaces.

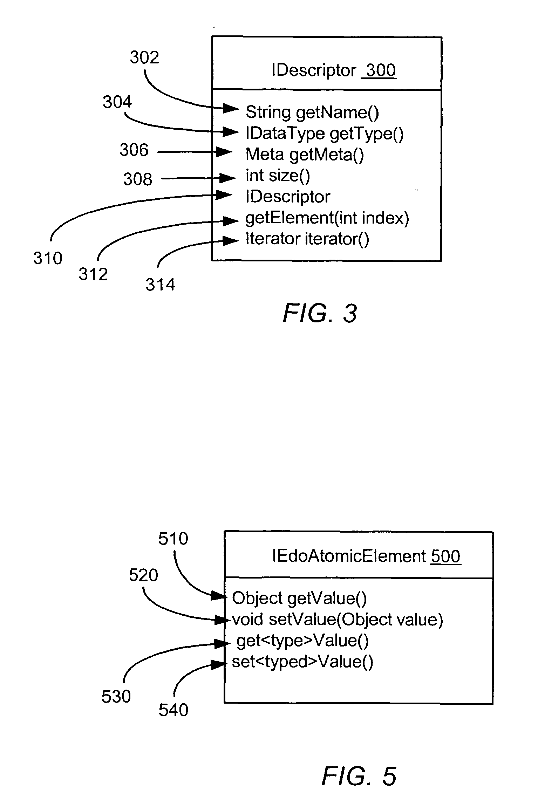

FIG. 3 is a block diagram illustrating selected aspects of IDescriptor interface 300. In an embodiment, IDescriptor interface 300 provides access to enterprise data object metadata. Thus, IDescriptor interface 300 enables the introspection of an enterprise data object by providing the functionality to access the object metadata. The illustrated embodiment of IDescriptor interface 300 includes the following methods: String getName() 302, IDataType getType() 304, Meta getMeta() 306, int size() 308, IDescriptor 310, getElement(int index) 312, and Iterator iterator() 314. In an alternative embodiment, Descriptor interface 210 may include more methods, fewer methods, and/or different methods.

Method String getName() 302 returns the name of an element of metadata. For example, if the enterprise data object contains a structure having one or more fields, String getName() 302 may return a field name. Method IDataType getType() 304 returns a type for an element of metadata. In an embodiment, Method Meta getMeta() 306 returns a meta flag for the element of metadata. The "meta flag" refers to a flag that indicates whether an element is a structure, a table, a variant, or an atomic element. Method int size() 308 returns the number of children that the element has. Method Iterator iterator() 314 returns an iterator over the children of the element.

Method IDescriptor 310 returns the descriptor for the element at a specified index. The "descriptor" refers to a description of the data type of the element. In an embodiment, the descriptors can be created and/or enhanced dynamically at runtime. Method getElement(int index) 312 returns the descriptor for the element at the specified index.

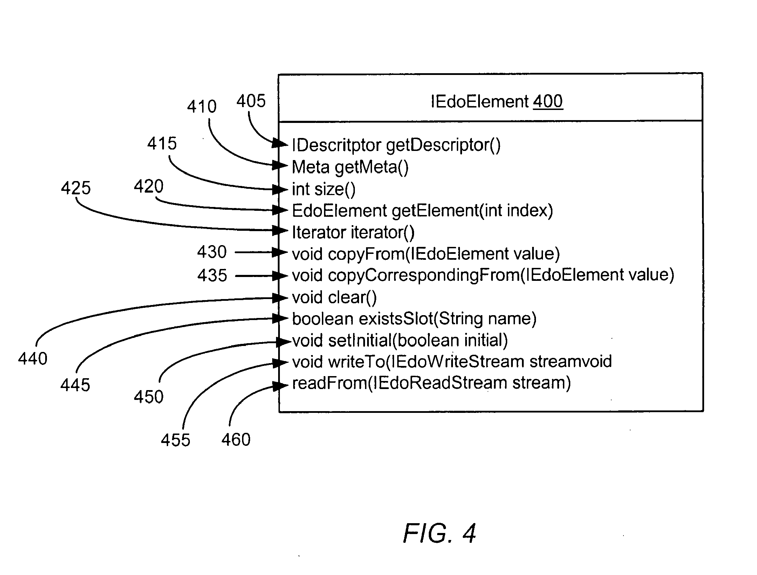

FIG. 4 is a block diagram illustrating selected aspects of IEdoElement interface 400. In an embodiment, IEdoElement interface 400 provides a common interface for all types of enterprise data objects. IEdoElement interface 400 provides the basic methods for operating with enterprise data objects. The illustrated embodiment of IEdoElement interface 400 includes the following methods: IDescritptor getDescriptor() 405, Meta getMeta() 410, int size() 415, EdoElement getElement(int index) 420, Iterator iterator() 425, void copyFrom(IEdoElement value) 430, void copyCorrespondingFrom(IEdoElement value) 435, void clear() 440, boolean existsSlot(String name) 445, void setinitial(boolean initial) 450, void writeTo(IEdoWriteStream stream) 455, and void readFrom(IEdoReadStream stream) 460. In an alternative embodiment, IEdoElement interface 400 may include more methods, fewer methods, and/or different methods.

In an embodiment, the following methods are substantially similar to the methods having the same name in IDescriptor interface 300: Meta getMeta() 410, int size() 415, EdoElement getElement(int index) 420, Iterator iterator() 425. Method IDescritptor getDescriptor() 405 returns a metadata descriptor for an enterprise data object element. Method void copyFrom(IEdoElement value) 430 copies a value from a different element to this element. In an embodiment, the two elements should have substantially identical descriptors and meta flags. In those cases where the elements do not have substantially identical descriptors, method void copyCorrespondingFrom(IEdoElement value) 435 can be used. Method void clear() 440 clears the contents of the element.

The term "slot" refers to a reserved place in an object that can contain either data or code. In an embodiment, IEdoElement 400 includes one or more methods to create and/or manipulate slots for an enterprise data object. For example, the illustrated embodiment, includes method boolean existsSlot(String name) 445 to determine whether a slot having a specified name exits. In one embodiment, IEdoElement 400 includes methods to create, name, and remove a slot.

In an embodiment, an enterprise data object element can be in a hollow state. The term "hollow state" refers to a state in which the values of the represented data have not yet been loaded into the internal data structure of the enterprise data object. If an enterprise data object is in a hollow state, then any operations invoked on the object raise exceptions. The state of an enterprise data object may be monitored by listeners. In one embodiment, only top-level elements can be in a hollow-state. The term "top-level" refers to the outermost element of a group of nested elements.

IEdoElement 400 interface includes a number of methods to operate on an element in a hollow state. For example, Method void setlnitial(boolean initial) 450 sets or resets an element in a hollow state based, at least in part, on the parameters true (for set) and false (for reset). In addition, IEdoElement 400 interface may include other methods for hollow handling such as methods to determine whether the element is in a hollow state and/or methods to add and remove listeners to monitor the state of the element.

In an embodiment, enterprise data object elements can be serialized into a stream and/or de-serialized from a stream. The terms marshalling and un-marshalling respectively refer to serializing and de-serializing data. In an embodiment, the marshalling and un-marshalling of data is performed in a manner that is independent of the data stream format. Enterprise data objects may support the writing and reading of data from the stream without holding the entire stream in memory. In one embodiment, the data stream format is based, at least in part, on the extensible Markup Language (XML). In such an embodiment, a Simple API for XML (SAX) parser is used for un-marshalling the data from the stream. In an embodiment, methods void writeTo(IEdoWriteStream stream) 450 and void readFrom(IEdoReadStream stream) 455 respectively write and read data to a stream.

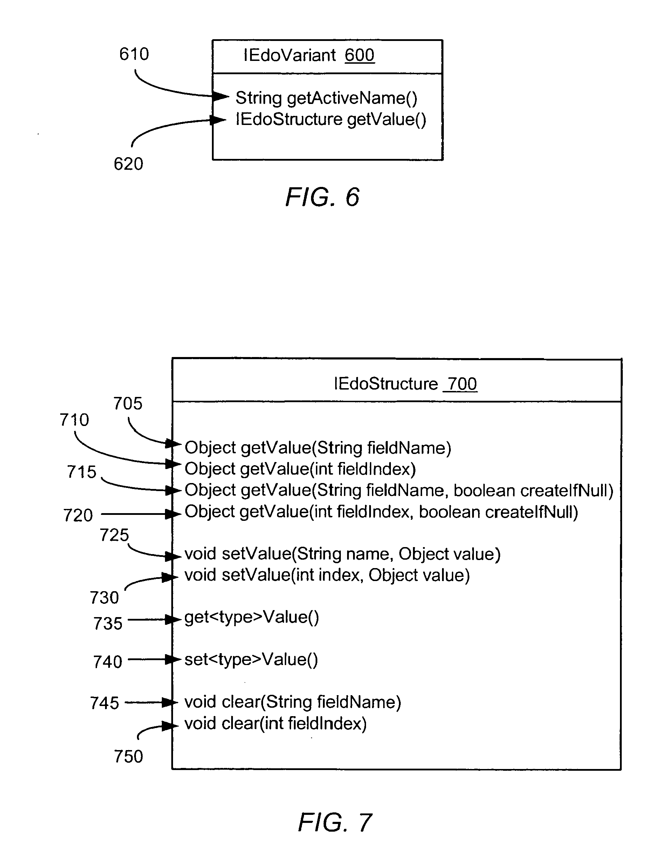

FIG. 5 is a block diagram illustrating selected aspects of IEdoAtomicElement interface 500. In an embodiment, IEdoAtomicElement interface 500 provides an interface to an EDO element containing a simple data type. Thus, atomic elements are elements that contain a value and do not have any child elements (or simply, children). The illustrated embodiment of IEdoAtomicElement interface 500 includes the following methods: Object getValue() 510, void setValue(Object value) 520, get<type>Value() 530, and set<typed>Value() 540. In an alternative embodiment, IEdoAtomicElement interface 500 may include more methods, fewer methods, and/or different methods.

Methods Object getValue() 510 and void setValue(Object value) 520 are respectively methods to get and set the value of the element. The data type of the value is based, at least in part, on the declared data type of the element. In an embodiment, IEdoAtomicElement interface 500 also contains typed access to the value. The term "typed access" refers to converting the data type of the value with a get method, if the requested conversion is possible. Examples of method get<type>Value() 530 include: int getIntValue(), double getDoubleValue(), String getStringValue(), Date getDateValue(), Time getTimeValue(), TimeStamp getTimeStampValue(), BigDecimal getDecimalValue(), and the like. Method set<typed>Value() 540 converts the data type of the value during a set operation, if the requested conversion is possible. Examples of set<typed>Value() 540 include: void setIntValue(int value), void setDoubleValue(double value), void setStringValue(String value), void setDateValue(Date value), void setTimeValue(Time Value), void setTimeStampValue(TimeStamp Value), void setDecimalValue(BigDecimal value), and the like.

FIG. 6 is a block diagram illustrating selected aspects of IEdoVariant interface 600. A "variant" refers to an element that can support many different data types, but only one of them can be active at a time. In an embodiment, variant elements do not have children. The illustrated embodiment of IEdoVariant interface 600 includes the following methods: String getActiveName() 610 and IEdoStructure getValue() 620. Method String getActiveName() 610 returns the name of the active structure. Method IEdoStructure getValue() 620 returns the active structure. If no structure is active, then this method returns null. In an alternative embodiment, IEdoVariant interface 600 may include more methods, fewer methods, and/or different methods.

FIG. 7 is a block diagram illustrating selected aspects of IEdoStructure interface 700. A "structure" refers to a data type having one or more fields. In an embodiment, the fields can be addressed by field names and/or an index that is given in a field descriptor. The illustrated embodiment of IEdoStructure interface 700 includes the following methods: Object getValue(String fieldName) 705, Object getValue(int fieldlndex) 710, Object getValue(String fieldName, boolean createIfNull) 715, Object getValue(int fieldIndex, boolean createIfNull) 720, void setValue(String name, Object value) 725, void setValue(int index, Object value) 730, get<type>Value() 735, set<type>Value() 740, void clear(String fieldName) 745, and void clear(int fieldIndex) 750. In an alternative embodiment, IEdoStructure interface 700 may include more methods, fewer methods, and/or different methods.

Methods 705-720 provide generic access to the value of a field. The data type of the returned value depends, at least in part, on the declared data type of the element. For example, method Object getValue(String fieldName) 705 returns a value having a data type of string. Similarly, method Object getValue(int fieldIndex) 710 returns a value having a data type of integer.

Methods 725 and 730 provide generic methods for changing the value of the element. The data type of the value provided by methods 725 and 730 should be compatible with the declared data type of the element. Method void setValue(String name, Object value) 725 addresses the field using the field name. Similarly, method void setvalue(int index, Object value) 730 addresses the field using the index of the field as specified by a descriptor.

In an embodiment method get<type>Value() 735 provides typed access to the value of a field. The term "typed access" refers to converting the data type of the value when accessing it, if the conversion is possible. Examples of method get<type>Value() 735 include: int getIntValue(String name), double getDoubleValue(String name), String getStringValue(String name), Date getDateValue(String name), Time getTimeValue(String name), TimeStamp getTimeStampValue(String name), BigDecimal getDecimalValue(String name), IEdoStructure getStructureValue(String name), IEdoTable getTableValue(String name), IEdoVariant getVariantValue(String name), IEdoStructure getStructureValue(String name, boolean createIfNull), IEdoTable getTableValue(String name, boolean createIfNull), IEdoVariant getVariantValue(String name, boolean createIfNull), int getIntValue(int fieldIndex), double getDoubleValue(int fieldIndex), String getStringValue(int fieldIndex), Date getDateValue(int fieldIndex), Time getTimeValue(int fieldIndex), TimeStamp getTimeStampValue(int fieldIndex), BigDecimal getDecimalValue(int fieldIndex), IEdoStructure getStructureValue(int fieldIndex), IEdoTable getTableValue(int fieldIndex), IEdoVariant getVariantValue(int fieldIndex), IEdoStructure getStructureValue(int fieldIndex, boolean createIfNull), IEdoTable getTableValue(int fieldIndex, boolean createIfNull), and IEdoVariant getVariantValue(int fieldIndex, boolean createIfNull).

In an embodiment, method set<type>Value() 740 is a typed method for changing the value of field. A "typed method" refers to a method that converts the data type of the value, if the specified conversion is possible. In an embodiment, method set<type>Value() 740 is not applicable to compound data types. Examples of method set<type>Value() 740 include: void setIntValue(String name, int value), void setDoubleValue(String name, double value), void setStringValue(String name, String value), void setDateValue(String name, Date value), void setTimeValue(String name, Time Value), void setTimeStampValue(String name, TimeStamp Value), void setDecimalValue(String name, BigDecimal value), void setIntValue(int index, int value), void setDoubleValue(int index, double value), void setStringValue(int index, String value), void setDateValue(int index, Date value), void setTimeValue(int index, Time Value), void setTimeStampValue(int index, TimeStamp Value), and void setDecimalValue(int index, BigDecimal value).

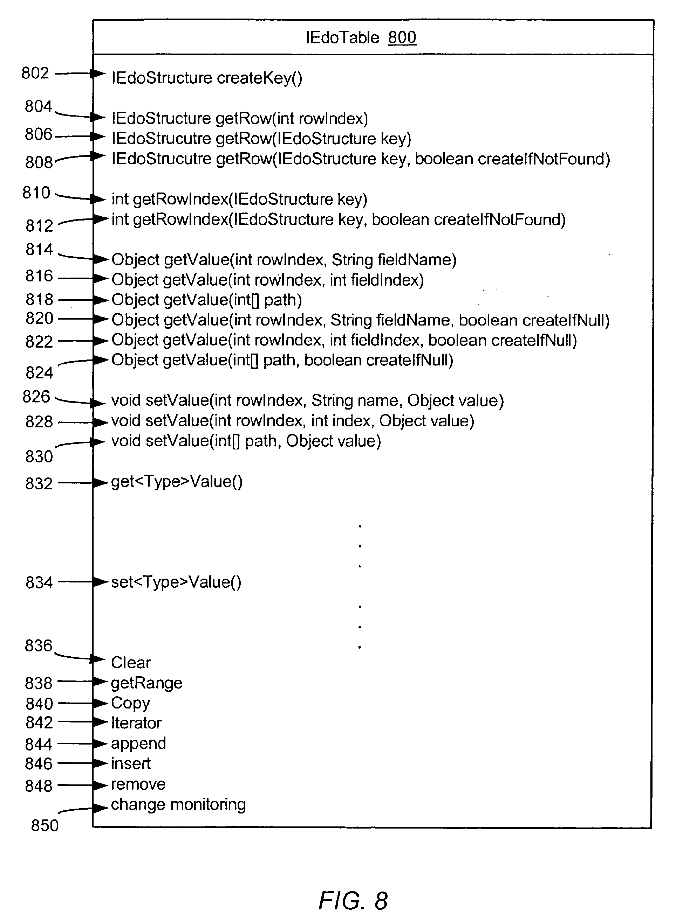

FIG. 8 is a block diagram illustrating selected aspects of IEdoTable interface 800. A "table" refers to an ordered list of structures. In an embodiment, the records of a table can be accessed by a key and/or an index that is given in a field descriptor. As is further described below, IEdoTable interface 800 includes a variety of methods to access and manipulate a table and the records of the table. In an alternative embodiment, IEdoTable interface 800 may include more methods, fewer methods, and/or different methods than those shown in FIG. 8.

Method IEdoStructure createKey() 802 creates a structure that can be used as key for a table. In an embodiment, this method returns a key that can be used as a key while accessing the rows of the table. Methods IEdoStructure getRow 804-808 retrieve a row of the table. The retrieval of a row can be based on the index of a row (e.g., method 804) and/or the key of the row (e.g., method 806). Methods int getRowIndex 810-812 provide the index of a row in the table. In an embodiment, a key is used to specify the row.

Methods getValue 814-824 provide generic access to the value of a field of a row within the table. The data type of the returned value depends on the declared data type of the element. The fields can be addressed based, at least in part, on a field name and/or a field index (e.g., as specified in a descriptor). The parameter "path" (e.g., in method 818) can be used to specify a field in a deep structured table. The "creatclfNull" parameter (e.g., in method 820) specifies whether a value is to be created, for example, if a field has no value. In an embodiment, methods getValue 814-824 return the current value of the field. The data type of the returned object depends on the declared data type of the element.

Methods set Value 826-830 provide generic methods for changing the value of a field in a row. The data type of the object is expected to be compatible with the declared data type of the element. In an embodiment, setValue 826-830 are not applicable for the fields of compound data types.

Method get<Type>Value() 832 provides typed access to the value of a field. The data type of the value is converted to the specified data type, if the conversion is possible. Examples of get<Type>Value() 832 include: int getIntValue(int rowIndex, String name), double getDoubleValue(int rowIndex, String name), String getStringValue(int rowIndex, String name), Date getDateValue(int rowIndex, String name), Time getTimeValue(int rowIndex, String name), TimeStamp getTimeStampValue(int rowIndex, String name), BigDecimal getDecimalValue(int rowIndex, String name), IEdoStructure getStructureValue(int rowIndex, String name), IEdoTable getTableValue(int rowIndex, String name), IEdoVariant getVariantValue(int rowIndex, String name), IEdoStrucutre getStructureValue(int rowIndex, String name, boolean createIfNull), IEdoTable getTableValue(int rowIndex, String name, boolean createIfNull), IEdoVariant getVariantValue(int rowIndex, String name, boolean createIfNull), int getIntValue(int rowIndex, int fieldIndex), double getDoubleValue(int rowIndex, int fieldIndex), String getStringValue(int rowIndex, int fieldIndex), Date getDateValue(int rowIndex, int fieldIndex), Time getTimeValue(int rowIndex, int fieldIndex), TimeStamp getTimeStampValue(int rowIndex, int fieldIndex), BigDecimal getDecimalValue(int rowIndex, int fieldIndex), IEdoStructure getStructureValue(int rowIndex, int fieldIndex), IEdoTable getTableValue(int rowIndex, int fieldIndex), IEdoVariant getVariantValue(int rowIndex, int fieldIndex), IEdoStructure getStructureValue(int rowIndex, int fieldIndex, boolean createIfNull), IEdoTable getTableValue(int rowIndex, int fieldIndex, boolean createIfNull), IEdoVariant getVariantValue(int rowIndex, int fieldIndex, boolean createIfNull), int getIntValue(int[] path), double getDoubleValue(int[] path), String getStringValue(int[] path), Date getDateValue(int[] path), Time getTimeValue(int[] path), TimeStamp getTimeStampValue(int[] path), BigDecimal getDecimalValue(int[] path), IEdoStructure getStructureValue(int[] path), IEdoTable getTableValue(int[] path), IEdoVariant getVariantValue(int[] path), IEdoStructure getStructureValue(int[] path, boolean createIfNull), IEdoTable getTableValue(int[] path, boolean createIfNull), and IEdoVariant getVariantValue(int[] path, boolean createIfNull).

Method set<Type>Value() 834 provides a typed method for changing the value of a field. The data type of the value is converted to the specified data type, if the conversion is possible. Examples of set<Type>Value() 834 include: void setIntValue(int rowIndex, String name, int value), void setDoubleValue(int rowIndex, String name, double value), void setStringValue(int rowIndex, String name, String value), void setDateValue(int rowIndex, String name, Date value), void setTimeValue(int rowIndex, String name, Time Value), void setTimeStampValue(int rowIndex, String name, TimeStamp Value), void setDecimalValue(int rowIndex, String name, BigDecimal value), void setIntValue(int rowIndex, int fieldIndex, int value), void setDoubleValue(int rowIndex, int fieldIndex, double value), void setStringValue(int rowIndex, int fieldIndex, String value), void setDateValue(int rowIndex, int fieldIndex, Date value), void setTimeValue(int rowIndex, int fieldIndex, Time Value), void setTimeStampValue(int rowIndex, int fieldIndex, TimeStamp Value), void setDecimalValue(int rowIndex, int fieldIndex, BigDecimal value), void setlntValue(int[] path, int value), void setDoubleValue(int[] path, double value), void setStringValue(int[] path, String value), void setDateValue(int[] path, Date value), void setTimeValue(int[] path, Time Value), void setTimeStampValue(int[] path, TimeStamp Value), and void setDecimalValue(int[] path, BigDecimal value).

Method clear 836 clears the value of a field. In an embodiment, the field can be identified by a field name and/or a field index. Also, a path parameter can be used to specify a field in a deep structured table.

A "range" represents a set of records. In an embodiment, getRange method 838 provides a range for specified records. The records may be specified by keys and/or indices. Method copy 840 copies a range of records from another table to update records in a specified table. Method Iterator 842 returns an iterator over the elements of the range.

Method append 844 adds one or more records to the table. Similarly, method insert 846 adds one or more records to the table at a specified index. Method remove 848 removes one or more records from the table based, at least in part, on a specified key and/or index and a range representing the records to be removed.

In an embodiment, changes made to a table can be monitored. A record of the the monitored changes can be stored and subsequently retrieved. Method change monitoring 850 illustrates a method to manipulate change monitoring (e.g., on, off, reset, etc.).

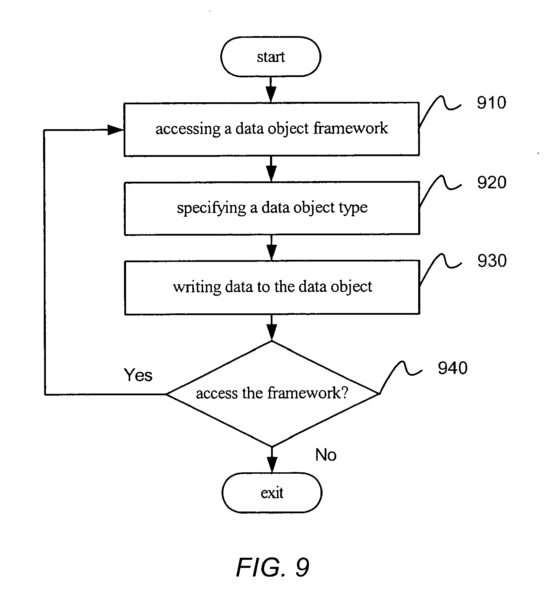

Turning now to FIG. 9, the particular methods associated with embodiments of the invention are described in terms of computer software and hardware with reference to a flowchart. The methods to be performed by a computing device (e.g., an application server) may constitute state machines or computer programs made up of computer-executable instructions. The computer-executable instructions may be written in a computer programming language or may be embodied in firmware logic. If written in a programming language conforming to a recognized standard, such instructions can be executed on a variety of hardware platforms and for interface to a variety of operating systems. In addition, embodiments of the invention are not described with reference to any particular programming language. It will be appreciated that a variety of programming languages may be used to implement embodiments of the invention as described herein. Furthermore, it is common in the art to speak of software, in one form or another (e.g., program, procedure, process, application, etc.), as taking an action or causing a result. Such expressions are merely a shorthand way of saying that execution of the software by a computing device causes the device to perform an action or produce a result.

FIG. 9 is a flow diagram illustrating certain aspects of a method for accessing and manipulating an enterprise data object, according to an embodiment of the invention. Referring to process block 910, a data object framework (e.g., framework 200 shown in FIG. 2) is accessed. In an embodiment, the functionality of one or more interfaces of the framework is invoked to define a data object (e.g., an enterprise data object). The data object includes an internal data structure (e.g., internal data structure 160, shown in FIG. 1) to contain data.

Referring to process block 920, a data type for the data object is specified. In an embodiment, the "data type" for the data object is defined by the data type of the values in the internal data structure. In one embodiment, one or more interfaces of the data object framework provide functionality to specify the data type. The data type may be either simple or complex. In an embodiment, supported complex data types include: variant, structure, and table.

Referring to process block 930, data is written to the data object from a data source. In an embodiment, one or more interfaces of the data object framework provide functionality to marshal and un-marshal a data stream from a data source. The data source may be, for example, a relational database, an XML data source, an object-oriented data source, an enterprise information system, another data object, and the like. The process may be repeated at 940.

Elements of embodiments of the present invention may also be provided as a machine-readable medium for storing the machine-executable instructions. The machine-readable medium may include, but is not limited to, flash memory, optical disks, compact disks-read only memory (CD-ROM), digital versatile/video disks (DVD) ROM, random access memory (RAM), erasable programmable read-only memory (EPROM), electrically erasable programmable read-only memory (EEPROM), magnetic or optical cards, propagation media or other type of machine-readable media suitable for storing electronic instructions. For example, embodiments of the invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention.

Similarly, it should be appreciated that in the foregoing description of embodiments of the invention, various features are sometimes grouped together in a single embodiment, figure, or description thereof for the purpose of streamlining the disclosure aiding in the understanding of one or more of the various inventive aspects. This method of disclosure, however, is not to be interpreted as reflecting an intention that the claimed subject matter requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

## Claims

1. A computer-implemented method comprising:
accessing a data object framework interface to define a data object, wherein the data object is to store enterprise data in an internal data structure;
specifying a data type for the data object based, at least in part, on the data object framework interface; and
writing data to the data object from a data source.

2. The method of claim 1, wherein specifying the data type comprises specifying that the data type is at least one of:
atomic;
variant;
structure; and
table.

3. The method of claim 1 or 2, wherein the data type is a structure having one or more fields and further comprising at least one of:
accessing a field based, at least in part, on a field name;
accessing the field based, at least in part, on an index; and
accessing the field based, at least in part, on an iterator.

4. The method of one of the preceding claims, wherein the data type is a table having one or more records and further comprising at least one of:
accessing a record based, at least in part, on a key field;
accessing the record based, at least in part, on an index; and
accessing the record based, at least in part, on an iterator.

5. The method of claim 4, further comprising:
copying at least a portion of a table from a data source to the internal data structure of the data object.

6. The method of one of the preceding claims, wherein the data source is at least one of:
a relational database;
an extensible markup language data source;
an object-oriented database; and
an enterprise information system.

7. The method of one of the preceding claims, further comprising:
accessing a metadata interface to obtain metadata corresponding to the data object; and
obtaining the metadata using a function provided by the metadata interface.

8. The method of one of the preceding claims, further comprising:
dynamically modifying metadata associated with the data object framework at runtime.

9. The method of claim 8, wherein dynamically modifying metadata associated with the data object framework at runtime comprises at least one of:
modifying metadata associated with a data type; and
modifying metadata associated with one or more instances of a data type.

10. An apparatus comprising:
an application to access a data object framework interface; and
a processor and logic executable thereon to,
access the data object framework interface to define a data object, wherein the data object is to store enterprise data in an internal data structure;
specify a data type for the data object based, at least in part, on the data object framework interface; and
write data to the data object from a data source.

11. The apparatus of claim 10, wherein the logic executable thereon to specify the data type comprises logic to specify that the data type is at least one of:
atomic;
variant;
structure; and
table.

12. The apparatus of claim 10 or 11, wherein the data type is a structure having one or more fields and the logic executable thereon further comprises logic to perform at least one of the following:
access a field based, at least in part, on a field name;
access the field based, at least in part, on an index; and
access the field based, at least in part, on an iterator.

13. The apparatus of one of the preceding claims 10 to 12, wherein the data type is a table having one or more records and the logic executable thereon further comprises logic to perform at least one of the following:
access a record based, at least in part, on a key field;
access the record based, at least in part, on an index; and
access the record based, at least in part, on an iterator.

14. An article of manufacture comprising:
an electronically accessible medium providing instructions that, when executed by an apparatus, cause the apparatus to
access a data object framework interface to define a data object, wherein the data object is to store enterprise data in an internal data structure;
specify a data type for the data object based, at least in part, on the data object framework interface; and
write data to the data object from a data source.

15. The article of manufacture of claim 14, wherein the instructions that, when executed by the apparatus, cause the apparatus to specify the data type, cause the apparatus to specify that the data type is at least one of:
atomic;
variant;
structure; and
table.

16. The article of manufacture of claim 14 or 15, wherein the data type is a structure having one or more fields and the electronically accessible medium provides further instructions that, when executed by the apparatus, cause the apparatus to perform at least one of:
access a field based, at least in part, on a field name;
access the field based, at least in part, on an index; and
access the field based, at least in part, on an iterator.

17. The article of manufacture of claim 14, 15 or 16, wherein the data type is a table having one or more records and the electronically accessible medium provides further instructions that, when executed by the apparatus, cause the apparatus to perform at least one of:
access a record based, at least in part, on a key field;
access the record based, at least in part, on an index; and
access the record based, at least in part, on an iterator.

18. The article of manufacture of one of the preceding claims 14 to 17, wherein the electronically accessible medium provides further instructions that, when executed by the apparatus, cause the apparatus to:
access a metadata interface to obtain metadata corresponding to the data object; and
obtain the metadata using a function provided by the metadata interface.

19. The article of manufacture of one of the preceding claims 14 to 18, wherein the electronically accessible medium provides further instructions that, when executed by the apparatus, cause the apparatus to:
dynamically modify metadata associated with the data object framework at runtime.

20. The article of manufacture of claim 19, wherein the instructions that, when executed by the apparatus, cause the apparatus to dynamically modify metadata associated with the data object framework at runtime, cause the apparatus to perform at least one of:
modify metadata associated with a data type; and
modify metadata associated with one or more instances of a data type.
